(19) **Europäisches Patentamt / European Patent Office / Office européen des brevets**

(11) **EP 4 020 348 A1**

(12) # EUROPEAN PATENT APPLICATION
published in accordance with Art. 153(4) EPC

(43) Date of publication:
**29.06.2022 Bulletin 2022/26**

(21) Application number: **20854455.1**

(22) Date of filing: **13.08.2020**

(51) International Patent Classification (IPC):
**G06Q 10/06** (2012.01)

(52) Cooperative Patent Classification (CPC):
**G06Q 10/06; G06Q 40/06**

(86) International application number:
**PCT/JP2020/030778**

(87) International publication number:
**WO 2021/033620 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.08.2019 US 201962889768 P**

(71) Applicant: **Sony Group Corporation
Tokyo 108-0075 (JP)**

(72) Inventors:
• **SASAKI, Takahiro**
  **Tokyo 141-0022 (JP)**
• **TAJIRI, Takao**
  **Tokyo 141-0022 (JP)**
• **MORITA, Takumi**
  **Tokyo 141-0022 (JP)**
• **YAMASHITA, Takashi**
  **Tokyo 141-0022 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND PROGRAM**

(57)    To implement more appropriate evaluation for an action by a person to be evaluated.

Provided is an information processing device including an evaluation unit that performs evaluation of an action by a person to be evaluated on the basis of action result data indicating a result of the action by the person to be evaluated regarding a predetermined task, in which the evaluation unit evaluates the action by the person to be evaluated on the basis of a result of style analysis that analyzes a style of the action by the person to be evaluated and a result of consistency analysis that analyzes consistency of the action by the person to be evaluated.

FIG. 16

**Description**

TECHNICAL FIELD

The present disclosure relates to an information processing device, an information processing method, and a program.

BACKGROUND ART

Regarding a task, it is very important to appropriately evaluate an executer of the task. For this purpose, many mechanisms for automating or assisting the evaluation as described above have been devised. For example, Patent Document 1 devises a mechanism for rating an investment trust fund.

CITATION LIST

PATENT DOCUMENT

Patent Document 1: Japanese Patent Application Laid-Open No. 2009-245368

SUMMARY OF THE INVENTION

PROBLEMS TO BE SOLVED BY THE INVENTION

In particular, in a case of performing evaluation of an executer who executes a task with a high specialty such as an investment trust fund, it is required to perform more appropriate evaluation on the basis of a multifaceted analysis.

SOLUTIONS TO PROBLEMS

According to a certain viewpoint of the present disclosure, provided is an information processing device including an evaluation unit that performs evaluation of an action by a person to be evaluated on the basis of action result data indicating a result of the action by the person to be evaluated regarding a predetermined task, in which the evaluation unit evaluates the action by the person to be evaluated on the basis of a result of style analysis that analyzes a style of the action by the person to be evaluated and a result of consistency analysis that analyzes consistency of the action by the person to be evaluated.

Furthermore, according to another viewpoint of the present disclosure, provided is an information processing method including performing evaluation, by a processor, of an action by a person to be evaluated on the basis of action result data indicating a result of the action by the person to be evaluated regarding a predetermined task, in which performing the evaluation further includes evaluating the action by the person to be evaluated on the basis of a result of style analysis that analyzes a style of the action by the person to be evaluated and a result of consistency analysis that analyzes consistency of the action by the person to be evaluated.

Furthermore, according to another viewpoint of the present disclosure, provided is a program for causing a computer to function as an information processing device including an evaluation unit that performs evaluation of an action by a person to be evaluated on the basis of action result data indicating a result of the action by the person to be evaluated regarding a predetermined task, in which the evaluation unit evaluates the action by the person to be evaluated on the basis of a result of style analysis that analyzes a style of the action by the person to be evaluated and a result of consistency analysis that analyzes consistency of the action by the person to be evaluated.

BRIEF DESCRIPTION OF DRAWINGS

Fig. 1 is a block diagram illustrating a functional configuration example of a learning device 10 according to an embodiment of the present disclosure.
Fig. 2 is a block diagram illustrating a functional configuration example of an evaluation device 20 according to the present embodiment.
Fig. 3 is a diagram for explaining generation of a style detector 212 by a learning unit 110 according to the embodiment.
Fig. 4 is a diagram for explaining generation of a resembler 214 by the learning unit 110 according to the embodiment.
Fig. 5 is a diagram for explaining an outline of outputs by the style detector 212 and the resembler 214 according to the embodiment.

Fig. 6 is a diagram for explaining an example of results of the outputs by the style detector 212 and the resembler 214 according to the embodiment and evaluation based on the results.

Fig. 7 is a diagram for explaining an example of results of the outputs by the style detector 212 and the resembler 214 according to the embodiment and evaluation based on the results.

Fig. 8 is a diagram for explaining an example of results of the outputs by the style detector 212 and the resembler 214 according to the embodiment and evaluation based on the results.

Fig. 9 is a diagram for explaining an example of results of the outputs by the style detector 212 and the resembler 214 according to the embodiment and evaluation based on the results.

Fig. 10 is a diagram for explaining generation of a third classifier 217 according to the embodiment and a two-dimensional map M0 output by the third classifier 217.

Fig. 11 is a diagram illustrating an example of an active return map M1 according to the embodiment.

Fig. 12 is a diagram illustrating an example of an active weight map M2 according to the embodiment.

Fig. 13 is a diagram illustrating an example of an active return & active weight map M3 according to the embodiment.

Fig. 14 is a diagram illustrating an example of a trading volume map M4 according to the embodiment.

Fig. 15 is a diagram illustrating an example of an active return & trading volume map M5 according to the embodiment.

Fig. 16 is a diagram for explaining integrated evaluation in three axes using three analysis results according to the embodiment.

Fig. 17 is a diagram illustrating an example of a comparison table comparing evaluations for a plurality of persons to be evaluated according to the embodiment.

Fig. 18 is a flowchart illustrating an example of a flow of processing by the evaluation device 20 according to the embodiment.

Fig. 19 is a block diagram illustrating a hardware configuration example of an information processing device 90 according to the embodiment.

## MODE FOR CARRYING OUT THE INVENTION

Hereinafter, preferred embodiments of the present disclosure will be described in detail with reference to the accompanying drawings. Note that, in the present specification and the drawings, components having substantially the same functional configuration are denoted by the same reference signs, and redundant explanations will be omitted.

Note that, the description will be given in the following order.

1. Embodiment
1.1. Background
1.2. Functional configuration example of learning device 10
1.3. Functional configuration example of evaluation device 20
1.4. Evaluation of "habits" regarding action by person to be evaluated
1.5. Evaluation of "skills" regarding action by person to be evaluated
1.6. Integrated evaluation based on each analysis result
1.7. Flow of processing
2. Hardware configuration example
3. Conclusion

<1. Embodiment>

<<1.1. Background>>

As described above, regarding a certain task, it is very important to appropriately evaluate an executer (hereinafter, also referred to as a person to be evaluated) of the task regardless of business areas and business types. However, there is a case where it is difficult to perform appropriate evaluation in a case where a specialty of the task executed by the person to be evaluated is high and an evaluator does not have expertise regarding the task equivalent to that of the person to be evaluated.

Here, as an example, a case is assumed where evaluation of a fund manager is performed in a certain fund. The evaluator belonging to the fund performs evaluation for, for example, a contracted fund manager or a new fund manager as a candidate for a contract in the future as a person to be evaluated.

However, here, in a case where the evaluator belonging to the fund does not have expert knowledge equivalent to that of the person to be evaluated, it is difficult for the evaluator to appropriately evaluate the person to be evaluated. Furthermore, a situation or the like may occur in which the evaluator cannot grasp explanations of a strategy and the like by the person to be evaluated, and has to accept words of the person to be evaluated.

For this reason, in particular, in the case of evaluating a person to be evaluated who executes a task with a high specialty such as a fund manager (or fund), it is important to visualize the evaluation on the basis of a multifaceted analysis.

A technical concept according to an embodiment of the present invention has been conceived by focusing on points described above, and implements more appropriate evaluation for an action by the person to be evaluated.

For this purpose, an evaluation device 20 according to the embodiment of the present invention evaluates the action by the person to be evaluated on the basis of results of a plurality of analyses using a machine learning algorithm.

For example, the evaluation device 20 according to the present embodiment evaluates "habits" regarding the action by the person to be evaluated on the basis of output results by a first classifier and a second classifier generated by machine learning.

Furthermore, for example, the evaluation device 20 according to the present embodiment may evaluate "skills" regarding the action by the person to be evaluated on the basis of an output result by a third classifier generated by machine learning.

Hereinafter, a detailed description will be given of a functional configuration for implementing the evaluation as described above.

<<1.2. Functional configuration example of learning device 10>>

First, a functional configuration example of a learning device 10 according to the present embodiment will be described. The learning device 10 according to the present embodiment is an information processing device that generates the first classifier, the second classifier, or the third classifier described above.

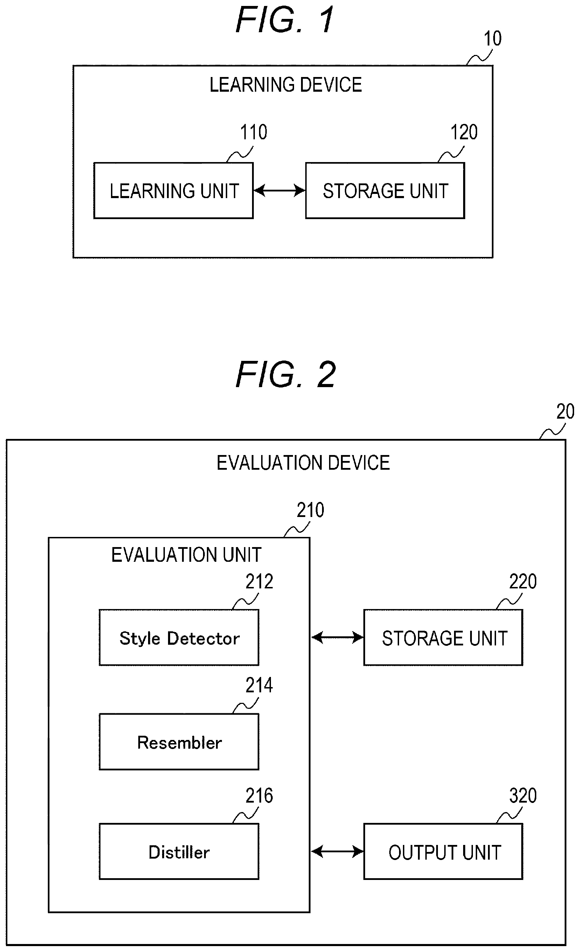

Fig. 1 is a block diagram illustrating the functional configuration example of the learning device 10 according to the present embodiment. As illustrated in Fig. 1, the learning device 10 according to the present embodiment includes a learning unit 110, a storage unit 120, and the like.

(Learning unit 110)

The learning unit 110 according to the present embodiment generates the first classifier, the second classifier, or the third classifier by a machine learning algorithm.

For example, the learning unit 110 according to the present embodiment may generate the first classifier and the second classifier by supervised learning using a deep neural network.

Furthermore, for example, the learning unit 110 according to the present embodiment may generate the third classifier by unsupervised learning using a neural network.

Details of learning by the learning unit 110 according to the present embodiment will be separately described in detail. Note that, a function of the learning unit 110 according to the present embodiment is implemented by a processor such as a GPU.

(Storage unit 120)

The storage unit 120 according to the present embodiment stores various types of information regarding learning executed by the learning unit 110. For example, the storage unit 120 stores a structure of a network used for learning by the learning unit 110, various parameters regarding the network, learning data, and the like.

In the above, the functional configuration example of the learning device 10 according to the present embodiment has been described. Note that, the functional configuration described above with reference to Fig. 1 is merely an example, and the functional configuration of the learning device 10 according to the present embodiment is not limited to the example.

For example, the learning device 10 according to the present embodiment may further include an operation unit that receives an operation by the user, a display unit that displays various types of information, and the like.

Furthermore, the learning device 10 does not necessarily have to generate all of the first classifier, the second classifier, and three classifiers. The first classifier, the second classifier, and the three classifiers according to the present embodiment may be generated by different learning devices 10, respectively.

The functional configuration of the learning device 10 according to the present embodiment can be flexibly modified depending on specifications and operations.

<<1.3. Functional configuration example of evaluation device 20>>

Next, a functional configuration example of the evaluation device 20 according to the present embodiment will be described. The evaluation device 20 according to the present embodiment is an information processing device that performs evaluation of the action by the person to be evaluated.

Fig. 2 is a block diagram illustrating the functional configuration example of the evaluation device 20 according to the present embodiment. As illustrated in Fig. 2, the evaluation device 20 according to the present embodiment includes an evaluation unit 210, a storage unit 220, an output unit 230, and the like.

(Evaluation unit 210)

The evaluation unit 210 according to the present embodiment performs evaluation of the action by the person to be evaluated on the basis of action result data indicating a result of the action by the person to be evaluated regarding a predetermined task.

Examples of the person to be evaluated according to the present embodiment include the above-described fund manager, and the like. In this case, the predetermined task described above may be asset management. Furthermore, examples of the action by the person to be evaluated described above include a trade transaction of a financial product such as a stock. Furthermore, the action result data may be data in which a result of the transaction (for example, a date of purchasing a certain stock, an amount of purchase, a date of selling a certain stock, an amount of sale, and the like) is recorded.

Note that, in the following description, a case where the person to be evaluated is a fund manager will be described as a main example, but the person to be evaluated according to the present embodiment is not limited to such an example.

The person to be evaluated according to the present embodiment may be, for example, a sales staff belonging to a company or the like. In this case, the predetermined task described above may be a sales activity. Furthermore, examples of the action by the person to be evaluated described above include visit to a customer (including a prospective customer), telephone call, email, presentation, and the like. Furthermore, the action result data may be data in which results (for example, a visit date, the number of telephone calls, the number of emails, the presence or absence of presentation, and the like) of each action as described above are recorded.

Furthermore, one of features of the evaluation unit 210 according to the present embodiment is to perform evaluation of the action by the person to be evaluated on the basis of the results of the analysis using the first classifier, the second classifier, and the third classifier described above.

A style detector 212 according to the present embodiment is an example of the first classifier. The style detector 212 according to the present embodiment is used for style analysis that analyzes a style of the action by the person to be evaluated.

Furthermore, a resembler 214 according to the present embodiment is an example of the second classifier. The resembler 214 according to the present embodiment is used for consistency analysis that analyzes consistency of the action by the person to be evaluated.

Furthermore, a distiller 216 according to the present embodiment, the distiller 216 according to the present embodiment is used for contribution analysis that analyzes contribution of the action by the person to be evaluated to an evaluation item in a predetermined task.

A detailed description will be separately given of each analysis using the style detector 212, the resembler 214, or the distiller 216 according to the present embodiment, and evaluation based on a result of each analysis. Note that, a function of the evaluation unit 210 according to the present embodiment is implemented by a processor such as a GPU or a CPU.

(Storage unit 220)

The storage unit 220 according to the present embodiment stores various types of information used by the evaluation device 20. The storage unit 220 stores information, for example, action result data indicating a result of the action by the person to be evaluated, a program used by the evaluation unit 210, a result of evaluation by the evaluation unit 210, and the like.

(Output unit 230)

The output unit 230 according to the present embodiment outputs the result of the evaluation by the evaluation unit 210. For example, the output unit 230 according to the present embodiment may display the result of the evaluation described above. In this case, the output unit 230 includes various displays. Furthermore, for example, the output unit 230 may print the result of the evaluation described above on a paper medium. In this case, the output unit 230 includes a printer.

In the above, the functional configuration example of the evaluation device 20 according to the present embodiment has been described. Note that, the functional configuration described above with reference to Fig. 2 is merely an example, and the functional configuration of the evaluation device 20 according to the present embodiment is not limited to the example.

For example, as illustrated in Fig. 2, the evaluation unit 210 according to the present embodiment may include the style detector 212, the resembler 214, and the distiller 216, and perform each analysis by itself using them.

On the other hand, each analysis by the style detector 212, the resembler 214, or the distiller 216 may be executed by, for example, a separate device arranged on a cloud. In this case, the evaluation unit 210 according to the present embodiment can perform evaluation of the action by a person to be targeted on the basis of the result by acquiring the result of each analysis from the separate device described above.

Furthermore, for example, the evaluation unit 210 and the output unit 230 do not necessarily have to be provided in the same device. As an example, the output unit 230 provided in a locally arranged device may acquire a result of evaluation by the evaluation unit 210 provided in the separate device arranged in the cloud and output the result.

The functional configuration of the evaluation device 20 according to the present embodiment can be flexibly modified depending on specifications and operations.

<<1.4. Evaluation of "habits" regarding action by person to be evaluated>>

Next, a detailed description will be given of evaluation of the "habits" regarding the action by the person to be evaluated by the evaluation unit 210 according to the present embodiment.

The evaluation unit 210 according to the present embodiment may evaluate the "habits" regarding the action by the person to be evaluated on the basis of a result of the style analysis that analyzes the style of the action by the person to be evaluated and a result of the consistency analysis that analyzes the consistency of the action by the person to be evaluated.

For example, a case is assumed where the predetermined task is asset management, and the action by the person to be evaluated (fund manager) is a trade transaction of a financial product such as a stock. In this case, the style analysis according to the present embodiment can be the one that analyzes a management style (it can also be said that it is a management strategy) of the fund manager. Furthermore, the consistency analysis according to the present embodiment can be the one that analyzes consistency of the management.

That is, the evaluation unit 210 according to the present embodiment may evaluate the "habits" of the fund manager on the basis of the management style and consistency of the management of the fund manager.

According to the evaluation method as described above, for example, it is possible to grasp what characteristics the fund manager who is the person to be evaluated has regarding the trade transaction of the financial product.

Furthermore, according to the evaluation method as described above, for example, it is possible to grasp what action the fund manager who is the person to be evaluated takes in various economic backgrounds.

Moreover, according to the evaluation method as described above, it is possible to accurately determine whether the action by the fund manager is consistent without deviating from a proposal that has progressed with respect to the fund, and whether the deviation is appropriate or to be warned in a case where the action is deviated.

Hereinafter, a detailed description will be given of the style analysis and the consistency analysis according to the present embodiment, and the evaluation method using the results of each analysis.

First, the style analysis according to the present embodiment will be described. The style analysis according to the present embodiment may be analysis of inputting the action result data to the first classifier generated by deep learning, that is, the style detector 212, and classifying the style of the action by the person to be evaluated.

Here, a method of generating the style detector 212 according to the present embodiment will be described. To cause a deep neural network (DNN) to acquire a classification ability regarding the style, a method is assumed in which result data of actions corresponding to a plurality of styles used as references is given as training data, and supervised learning is performed.

However, there are many cases where the result data of the action faithfully reflecting the style used as the reference does not exist.

For this reason, the style detector 212 according to the present embodiment may be generated by supervised learning using a plurality of sets of virtual action result data based on mutually different styles as training data.

The virtual action result data may be data indicating a result of a virtual action obtained by a program for virtually executing an action regarding the predetermined task on the basis of a predetermined style.

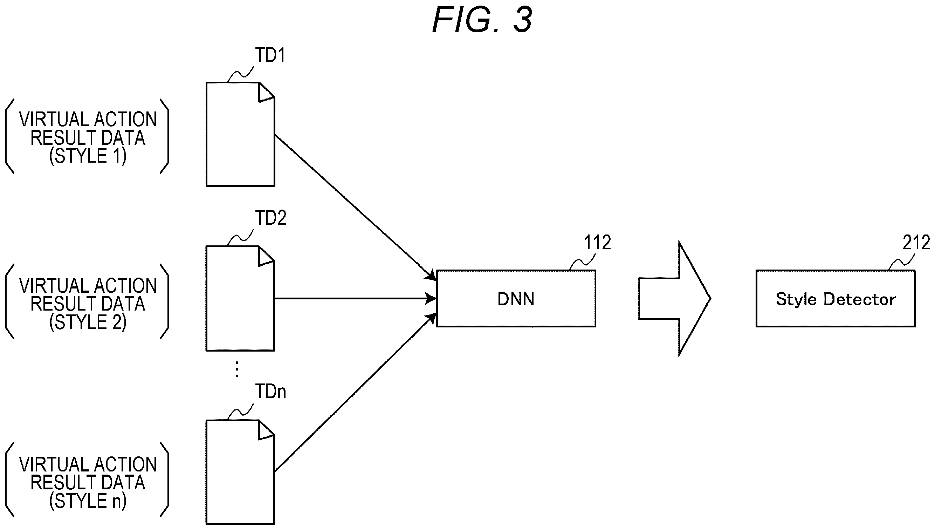

Fig. 3 is a diagram for explaining generation of the style detector 212 by the learning unit 110 according to the present embodiment.

For example, in the case of the example illustrated in Fig. 3, a plurality of sets of training data TD1 to TDn is given to a DNN 112.

Here, the training data TD1 may be virtual action result data obtained by a program (virtual fund manager 1) that virtually executes a trade transaction of a financial product on the basis of a style 1.

Furthermore, the training data TD2 may be virtual action result data obtained by a program (virtual fund manager 2) that virtually executes a trade transaction of a financial product on the basis of a style 2.

Furthermore, the training data TDn may be virtual action result data obtained by a program (virtual fund manager n) that virtually executes a trade transaction of a financial product on the basis of a style n.

According to the supervised learning using the training data TD1 to TDn as described above, it is possible to cause the DNN 112 to acquire the classification ability regarding the styles 1 to n. Furthermore, in the present embodiment, the DNN 112 that has acquired the classification ability is used as the style detector 212.

Note that, as the styles 1 to N, for example, Value, Growth, High Dividend, Minimum Volatility, Momentum, Quality, Fixed Weight, Technical, and the like, which are typical styles in asset management, may be adopted.

Next, the consistency analysis according to the present embodiment will be described. The consistency analysis according to the present embodiment may be analysis of inputting the action result data to the second classifier generated by deep learning, that is, the resembler 214, and classifying similarity to others regarding the action by the person to be evaluated.

Here, a method of generating the resembler 214 according to the present embodiment will be described. To cause the DNN to acquire a classification ability regarding the similarity to others, a method is assumed in which result data of an action performed by another person as a reference is given as training data and supervised learning is performed.

For this reason, the resembler 214 according to the present embodiment may be generated by supervised learning using a plurality of sets of other person's action result data regarding a plurality of real others as training data.

The other person's action result data may be data indicating results of actions by the real others regarding the predetermined task.

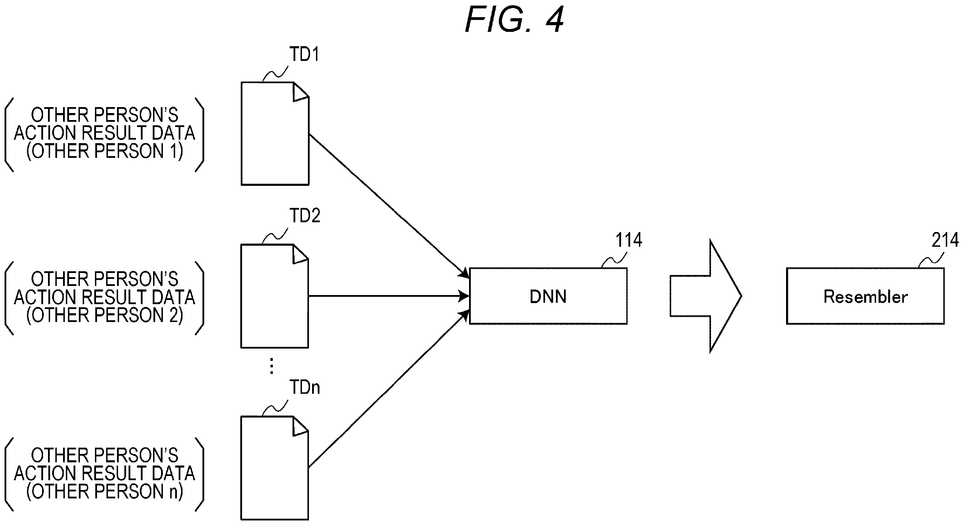

Fig. 4 is a diagram for explaining generation of the resembler 214 by the learning unit 110 according to the present embodiment.

For example, in the case of the example illustrated in Fig. 4, the plurality of sets of the training data TD1 to TDn is given to a DNN 114.

Here, the training data TD1 may be other person's action result data indicating a result of an action by existing another person 1 (fund manager 1).

Furthermore, the training data TD2 may be other person's action result data indicating a result of an action by existing another person 2 (fund manager 2).

Furthermore, the training data TDn may be other person's action result data indicating a result of an action by existing another person n (fund manager n).

According to the supervised learning using the training data TD1 to TDn as described above, it is possible to cause the DNN 114 to acquire the classification ability regarding the similarity to the other persons 1 to n. Furthermore, in the present embodiment, the DNN 114 that has acquired the classification ability is used as the resembler 214.

In the above, the methods for generating the style detector 212 and the resembler 214 have been described. Next, a description will be given of analyses using the style detector 212 and the resembler 214 according to the present embodiment and evaluation based on results of the analyses.

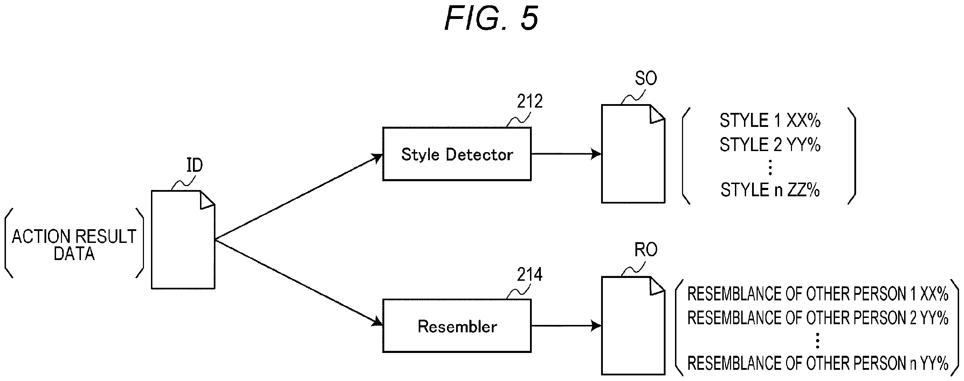

Fig. 5 is a diagram for explaining an outline of outputs by the style detector 212 and the resembler 214 according to the present embodiment.

As illustrated in Fig. 5, to the style detector 212 and the resembler 214 according to the present embodiment, action result data indicating results of the action by the person to be evaluated is given as input data ID.

At this time, the style detector 212 outputs output data SO indicating how much the action result data given as the input data ID matches each style corresponding to the training data given at the time of learning.

On the other hand, the resembler 214 outputs output data RO indicating how similar the action result data given as the input data ID is to each of other persons corresponding to the training data given at the time of learning.

Note that, at the time of learning for generating the resembler 214, action result data indicating results of the action by the person to be evaluated may be further given as training data. In this case, the resembler 214 can also calculate how much the action result data given as the input data ID looks like that of the person to be evaluated.

In the above, the outline of the outputs by the style detector 212 and the resembler 214 according to the present embodiment according to the present embodiment has been described. One of the features of the evaluation unit 210 according to the present embodiment is to evaluate the action of the person to be evaluated on the basis of the result of the style analysis and the result of the consistency analysis as described above.

For example, the evaluation unit 210 according to the present embodiment may evaluate the action of the person to be evaluated on the basis of stability regarding the style of the action of the person to be evaluated within a period corresponding to the action result data input and stability regarding the consistency of the action by the subject within the period.

More specifically, the evaluation unit 210 according to the present embodiment may evaluate the action by the person to be evaluated on the basis of a first axis indicating whether the style of the action by the person to be evaluated continues or varies within the period and a second axis indicating whether the consistency of the action by the person to be evaluated is maintained or not within the period.

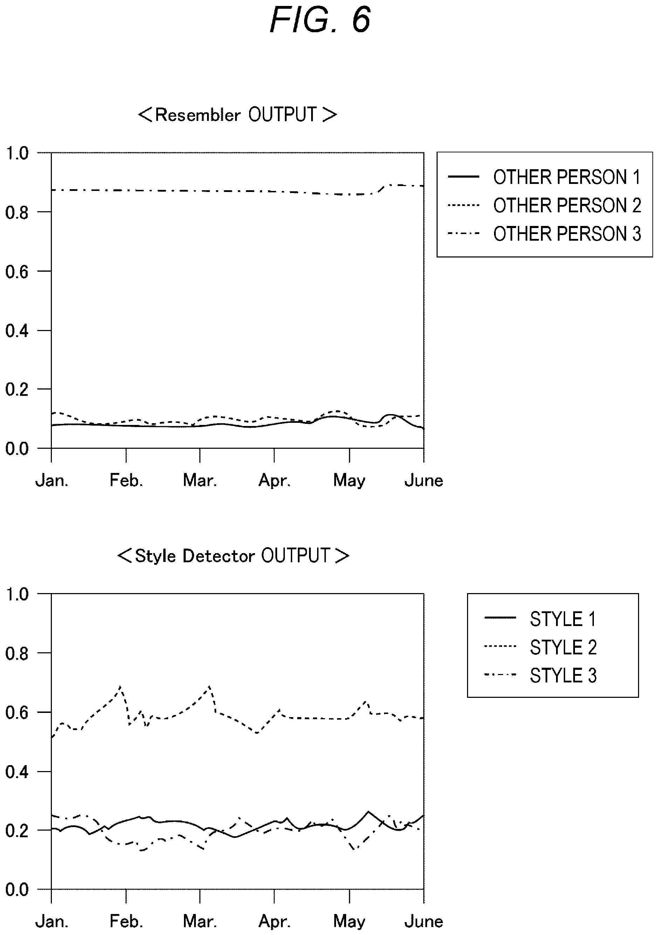

Figs. 6 to 9 each are a diagram for explaining an example of results of the outputs by the style detector 212 and the resembler 214 according to the present embodiment and evaluation based on the results.

For example, in the case of the example illustrated in Fig. 6, focusing on the results of the outputs by the resembler 214, it can be seen that the resemblance of another person 3 is continuously dominant within the period corresponding to the action result data. In this case, the evaluation unit 210 may determine that the consistency of the action by the person to be evaluated within the period is maintained.

On the other hand, focusing on the results of the outputs by the style detector 212, it can be seen that the style 2 is continuously dominant within the period corresponding to the action result data. In this case, the evaluation unit 210 may determine that the action by the person to be evaluated within the period is stable.

As described above, in a case where it can be determined that the action by the person to be evaluated is consistent and the style of the action is stable, the evaluation unit 210 may evaluate that a factor-based investment action is performed in which a factor and an investment strategy of the fund manager continue.

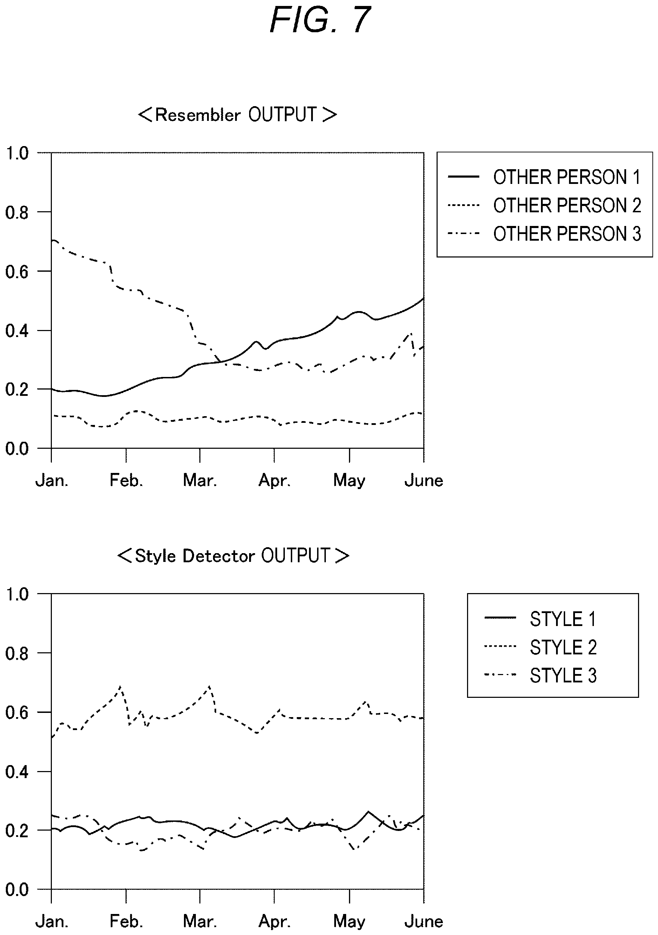

Furthermore, for example, in the case of the example illustrated in Fig. 7, focusing on the results of the outputs by the resembler 214, it can be seen that the resemblance of the other person 3 is dominant in the first half while the resemblance of the other person 1 is dominant in the second half within the period corresponding to the action result data. In such a case, the evaluation unit 210 may determine that the consistency of the action by the person to be evaluated within the period is not maintained (is not consistent).

On the other hand, focusing on the results of the outputs by the style detector 212, it can be seen that the style 2 is continuously dominant within the period corresponding to the action result data. In this case, the evaluation unit 210 may determine that the action by the person to be evaluated within the period is stable.

As described above, in a case where it can be determined that the action by the person to be evaluated is not consistent and the style of the action is stable, the evaluation unit 210 may evaluate that factor exposure is stable although the action is not consistent.

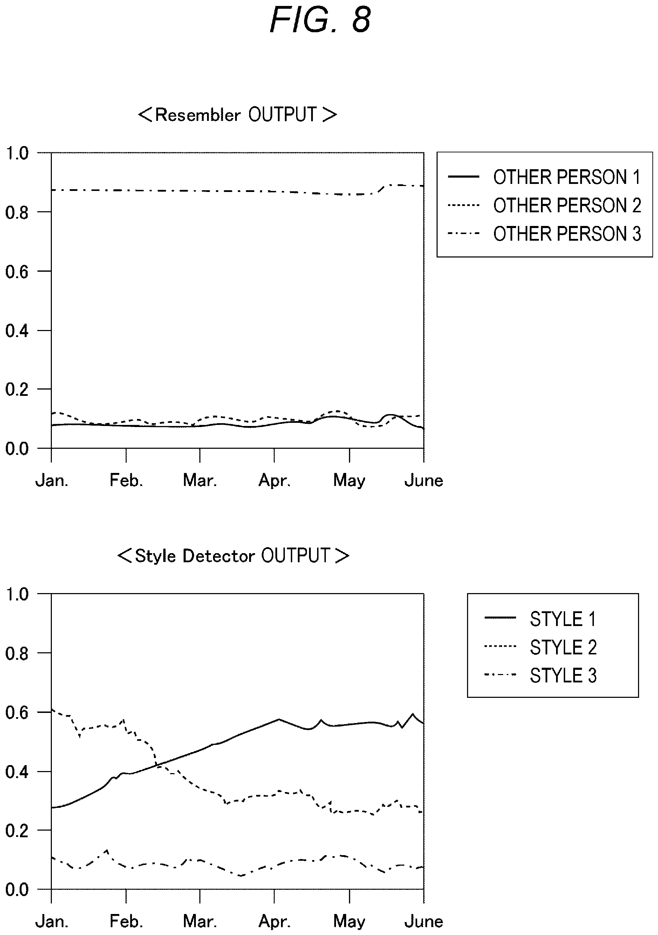

Furthermore, for example, in the case of the example illustrated in Fig. 8, focusing on the results of the outputs by the resembler 214, it can be seen that the resemblance of the other person 3 is continuously dominant within the period corresponding to the action result data. In this case, the evaluation unit 210 may determine that the consistency of the action by the person to be evaluated within the period is maintained.

On the other hand, focusing on the results of the outputs by the style detector 212, it can be seen that the style 3 is dominant in the first half, while the style 1 is dominant in the second half within the period corresponding to the action result data. In such a case, the evaluation unit 210 may determine that the style of action by the person to be evaluated within the period varies.

As described above, in a case where it can be determined that the action by the person to be evaluated is consistent and the style of the action varies, the evaluation unit 210 may evaluate that an investment action is performed in a factor rotation manner in which an overall investment strategy is continued although a factor of investment differs depending on a market trend.

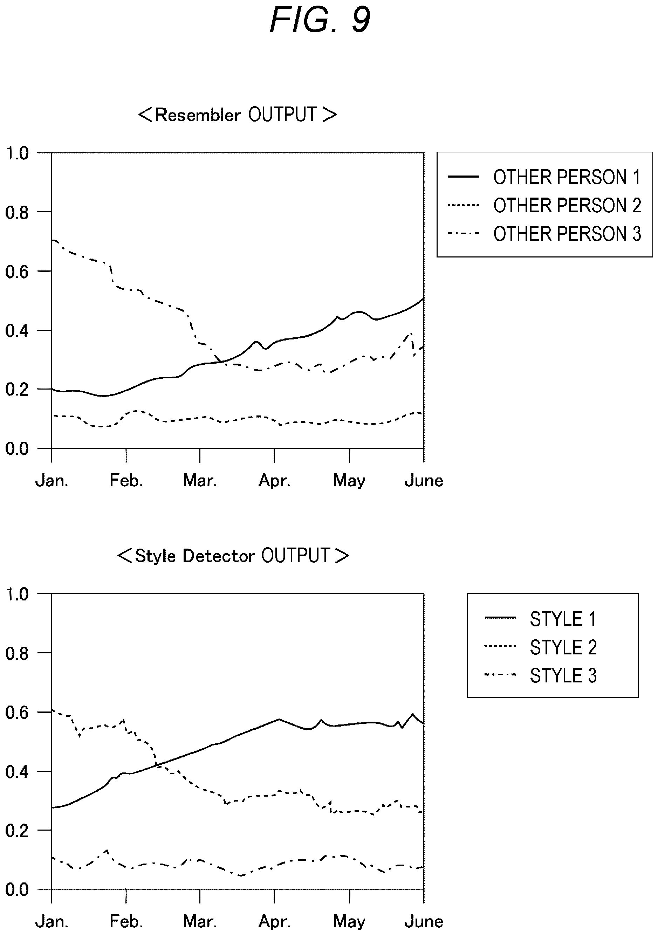

Furthermore, for example, in the case of the example illustrated in Fig. 9, focusing on the results of the outputs by the resembler 214, it can be seen that the resemblance of the other person 3 is dominant in the first half while the resemblance of the other person 1 is dominant in the second half within the period corresponding to the action result data. In such a case, the evaluation unit 210 may determine that the consistency of the action by the person to be evaluated within the period is not maintained (is not consistent).

On the other hand, focusing on the results of the outputs by the style detector 212, it can be seen that the style 3 is dominant in the first half, while the style 1 is dominant in the second half within the period corresponding to the action result data. In such a case, the evaluation unit 210 may determine that the style of action by the person to be evaluated within the period varies.

As described above, in a case where it can be determined that the action by the person to be evaluated is not consistent and the style of the action varies, the evaluation unit 210 may evaluate that an investment action is performed only by intuition and experience in which the management is not consistent and the style is not seen.

In the above, the results of the analysis using the style detector 212 and the resembler 214 according to the present embodiment and the evaluation based on the results have been described with specific examples.

According to the analysis using the style detector 212 and the resembler 214 according to the present embodiment, the action of the person to be evaluated can be more appropriately evaluated by using two axes of stability and consistency.

<<1.5. Evaluation of "skills" regarding action by person to be evaluated>>

Next, a detailed description will be given of evaluation of the "skills" regarding the action by the person to be evaluated, by the evaluation unit 210 according to the present embodiment.

In the above description, a method has been described in which the evaluation unit 210 according to the present embodiment evaluates the "habits" regarding the action by the person to be evaluated on the basis of the results of the analysis using the style detector 212 and the resembler 214.

The evaluation unit 210 according to the present embodiment can evaluate the action by the subject more finely and appropriately, by performing evaluation of the "skills" based on the result of the analysis using the distiller 216 in addition to the evaluation of the "habits" as described above.

The analysis using the distiller 216 according to the present embodiment can be said to be contribution analysis that analyzes the contribution of the action by the person to be evaluated to the evaluation item in the predetermined task.

The contribution analysis according to the present embodiment includes generating, by a third classifier, a two-dimensional map in which a plurality of objects is arranged on a plane, on the basis of attributes of the plurality of objects that is targets of the action by the evaluator input and the action result data for the objects. For example, in a case where the task is asset management, an object according to the present embodiment can be a name of stock.

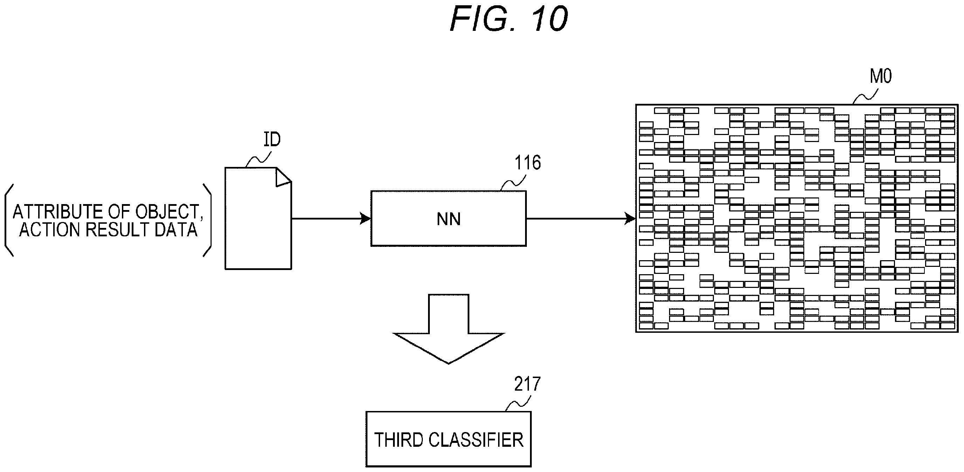

Fig. 10 is a diagram for explaining generation of a third classifier 217 according to the present embodiment and a two-dimensional map M0 output by the third classifier 217.

The third classifier 217 according to the present embodiment outputs the two-dimensional map M0 in which the plurality of objects is arranged on the plane, using the attributes of the plurality of objects that is targets of the action by the evaluator and the action result data for the objects as the input data ID. Note that, each of rectangles in the two-dimensional map M0 illustrated in Fig. 10 indicates the objects described above.

That is, it can be said that the third classifier 217 according to the present embodiment has a function of mapping a high-dimensional data set to a low-dimensional space while preserving a phase structure of a data distribution.

The third classifier 217 according to the present embodiment can be generated, for example, by repeatedly performing unsupervised learning in which the input data ID described above is given to a neural network (NN) 116 and the two-dimensional map M0 is output.

The third classifier 217 according to the present embodiment may be, for example, a self-organizing map. On the other hand, the third classifier 217 according to the present embodiment may be generated by using an algorithm such as variational autoencoder (VAE).

The distiller 216 according to the present embodiment performs contribution analysis using the third classifier 217 generated as described above. At this time, one of features of the distiller 216 according to the present embodiment is to express an intensity regarding the evaluation item in the predetermined task and an intensity regarding an action by a target person in a heat map form in the two-dimensional map M0 output by the third classifier 217.

For example, in a case where the predetermined task is asset management, examples of the evaluation item described above include active return. Here, the active return is an index indicating a difference between a return of a portfolio and a return of a benchmark.

The distiller 216 according to the present embodiment may calculate the active return on the basis of an attribute of a stock (here, the return of the benchmark described above) and action result data (here, the return of the portfolio), and generate an active return map M1 in which the active return is expressed in a heat map form on the two-dimensional map M0.

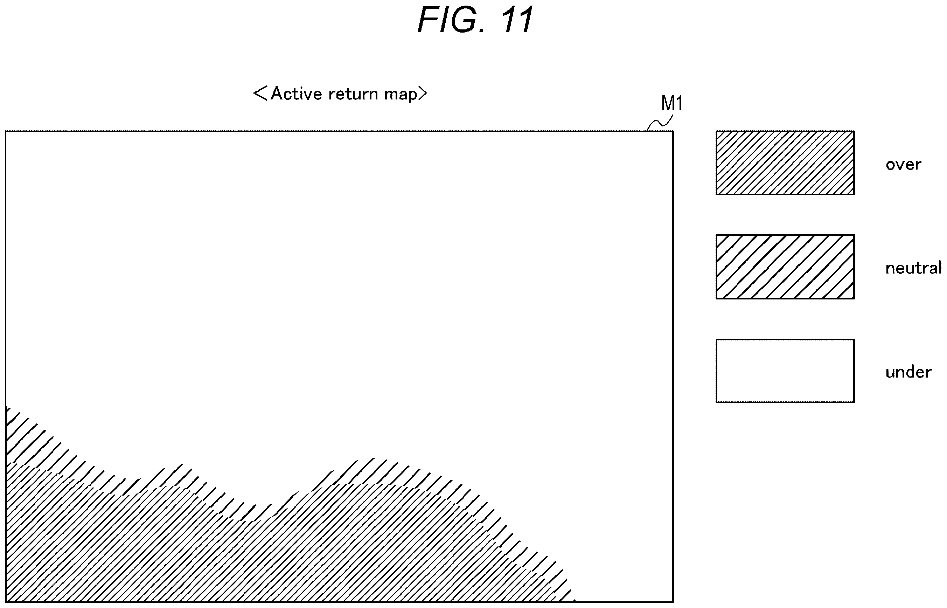

Fig. 11 is a diagram illustrating an example of the active return map M1 according to the present embodiment. In the active return map M1 illustrated in Fig. 11, the intensity of the active return is expressed by density of oblique lines.

Specifically, in the active return map M1 illustrated in Fig. 11, a region in which the return of the portfolio greatly exceeds the return of the benchmark is represented by high density oblique lines, and a region in which there is almost no difference between the return of the portfolio and the return of the benchmark is represented by low density oblique lines. Furthermore, a region in which the return of the portfolio is greatly below the return of the benchmark is represented by plain (white).

Note that, in the active return map M1 illustrated in Fig. 11, the intensity of the active return is represented by three stages described above to prioritize visibility, but the distiller 216 according to the present embodiment may express the intensity of the active return in more stages and continuously.

Furthermore, in the active return map M1 illustrated in Fig. 11, expression of each stock arranged on a plane is omitted to prioritize visibility. The same applies to each heat map described below.

Furthermore, the distiller 216 according to the present embodiment may further generate a heat map indicating the intensity regarding the action by the target person, as a target to be compared with a heat map indicating the intensity regarding the evaluation item in the predetermined task, such as the active return map M1.

For example, active weight can be mentioned as an example of an index of the intensity regarding the action of the target person described above. The active weight is an index indicating a deviation width between a composition ratio of a stock in the portfolio and a composition ratio of a stock in the benchmark.

The distiller 216 according to the present embodiment may calculate the active weight on the basis of an attribute of a stock (here, the composition ratio of the stock in the benchmark described above) and action result data (here, the composition ratio of the stock in the portfolio), and generate an active weight map M2 in which the active weight is expressed in a heat map form on the two-dimensional map M0.

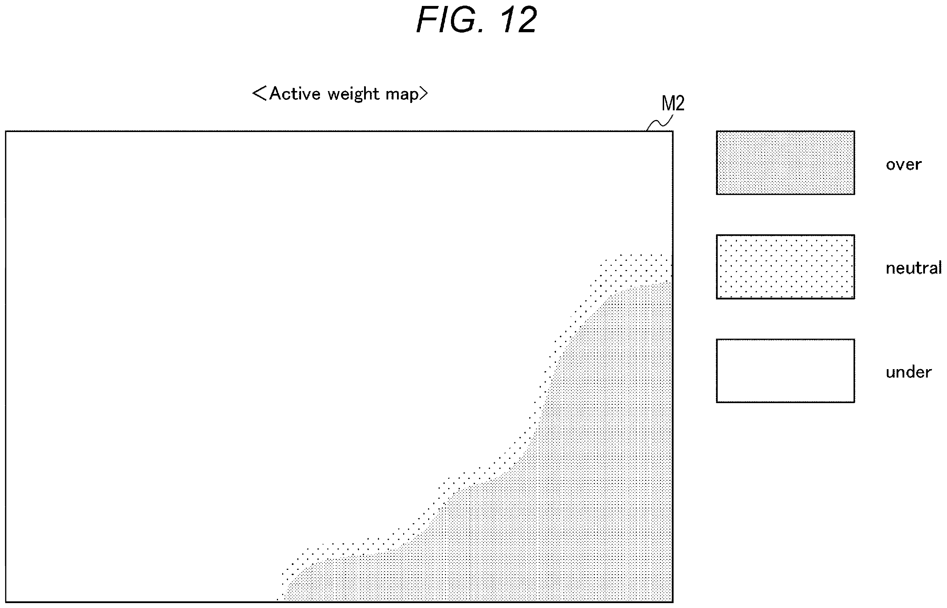

Fig. 12 is a diagram illustrating an example of the active weight map M2 according to the present embodiment. In the active weight map M2 illustrated in Fig. 12, the intensity of the active return is expressed by density of dots.

Specifically, in the active weight map M2 illustrated in Fig. 12, a region in which stock holdings in the portfolio greatly exceeds stock holdings in the benchmark is represented by high density dots. Furthermore, a region in which there is almost no difference between the stock holdings in the portfolio and the stock holdings in the benchmark is represented by low density dots. Furthermore, a region in which the stock holdings in the portfolio is greatly below the stock holdings in the benchmark is represented by plain (white).

Note that, in the active weight map M2 illustrated in Fig. 12, the intensity of the active weight is represented by three stages described above to prioritize visibility, but the distiller 216 according to the present embodiment may express the intensity of the active weight in more stages and continuously.

In the above, specific examples have been described of the heat map indicating the intensity regarding the evaluation item and the heat map indicating the intensity regarding the action of the target person according to the present embodiment.

The distiller 216 according to the present embodiment may further generate a heat map in which the two generated heat maps described above are superimposed on each other.

Furthermore, at this time, the evaluation unit 210 according to the present embodiment may evaluate whether or not the contribution of the action by the person to be evaluated to the evaluation item is due to an ability of the person to be evaluated, on the basis of the heat map (two-dimensional map) in which the two heat maps described above are superimposed on each other.

For example, the distiller 216 according to the present embodiment may generate an active return & active weight map M3 by superimposing the active return map M1 and the active weight map M2 on each other.

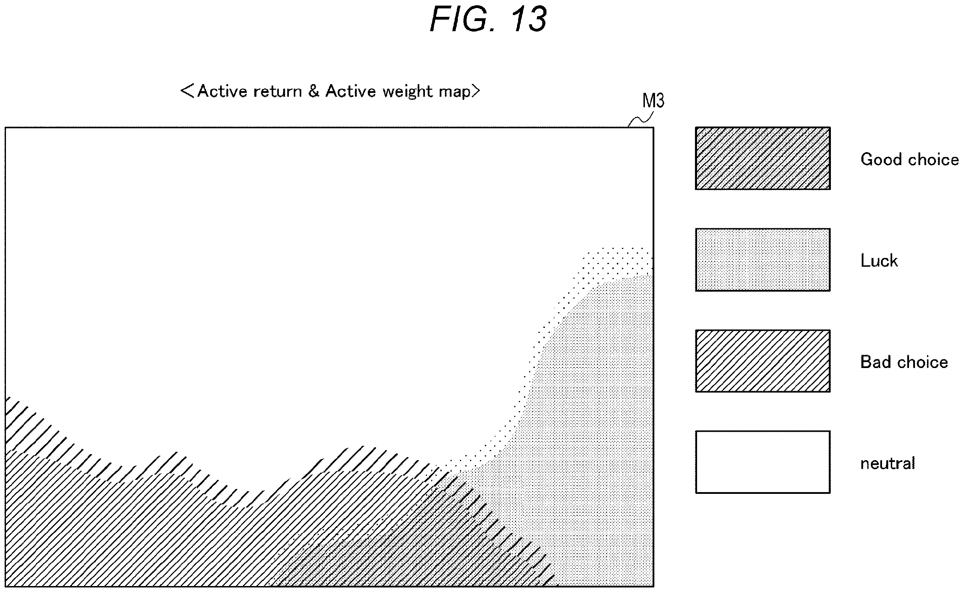

Fig. 13 is a diagram illustrating an example of the active return & active weight map M3 according to the present embodiment. At this time, the evaluation unit 210 according to the present embodiment can evaluate whether or not the contribution of the action by the person to be evaluated to the active return is due to the ability of the person to be evaluated, on the basis of the active return & active weight map M3.

For example, in the active return & active weight map M3 illustrated in Fig. 13, a region in which the active return is high and the active weight is high is expressed by superimposition of high density oblique lines and high density dots. The region can be said to be a region in which the stock holdings are large and a profit is made due to the action by the person to be evaluated.

The evaluation unit 210 according to the present embodiment may therefore evaluate a region in which a region having a high intensity regarding the evaluation item and a region having a high intensity regarding the action by the person to be evaluated overlap with each other, like the region described above, as a region (Good choice) having a high contribution by the ability of the person to be evaluated.

On the other hand, in the active return & active weight map M3 illustrated in Fig. 13, a region in which the active return is high and the active weight is low is expressed by high density oblique lines. The region can be said to be a region in which the stock holdings are small but a profit is made relatively.

The evaluation unit 210 according to the present embodiment may therefore evaluate a region in which a region having a high intensity regarding the evaluation item and a region having a low intensity regarding the action by the person to be evaluated overlap with each other, like the region described above, as a region having a low contribution by the ability of the person to be evaluated, that is, a region (Luck) in which a profit is generated by a fluke.

On the other hand, in the active return & active weight map M3 illustrated in Fig. 13, a region in which the active return is low and the active weight is high is expressed by high density dots. This region can be said to be a region in which the stock holdings are large and a loss is generated due to the action by the person to be evaluated.

The evaluation unit 210 according to the present embodiment may therefore evaluate a region in which a region having a low intensity regarding the evaluation item and a region having a high intensity regarding the action by the person to be evaluated overlap with each other, like the region described above, as a region (Bad choice) in which a loss is generated due to miscalculation by the person to be evaluated.

Furthermore, the evaluation unit 210 according to the present embodiment can also calculate a contribution ratio (intentional profit ratio (IPR)) indicating a profit generated by the "skills" of the person to be evaluated out of profits generated in asset management, on the basis of an area of each region evaluated as described above.

For example, in the case of the example illustrated in Fig. 13, IPR may be calculated by the following mathematical expression.

```
IPR = Good choice / Good choice + Luck
```

As described above, according to the evaluation using the distiller 216 according to the present embodiment, it is possible to more appropriately evaluate the ability (skills) of the person to be evaluated as compared with a case where the evaluation of the person to be evaluated is simply performed only with the active return.

Furthermore, the evaluation unit 210 can also perform evaluation such as how the ability of the person to be evaluated changes by continuously calculating IPR every predetermined period.

Furthermore, in the above description, the case has been exemplified where the evaluation unit 210 performs evaluation of the person to be evaluated on the basis of the active return and the active weight; however, the evaluation by the evaluation unit 210 according to the present embodiment is not limited to such an example.

The evaluation unit 210 according to the present embodiment may perform evaluation of the person to be evaluated on the basis of, for example, the active return and trading volume.

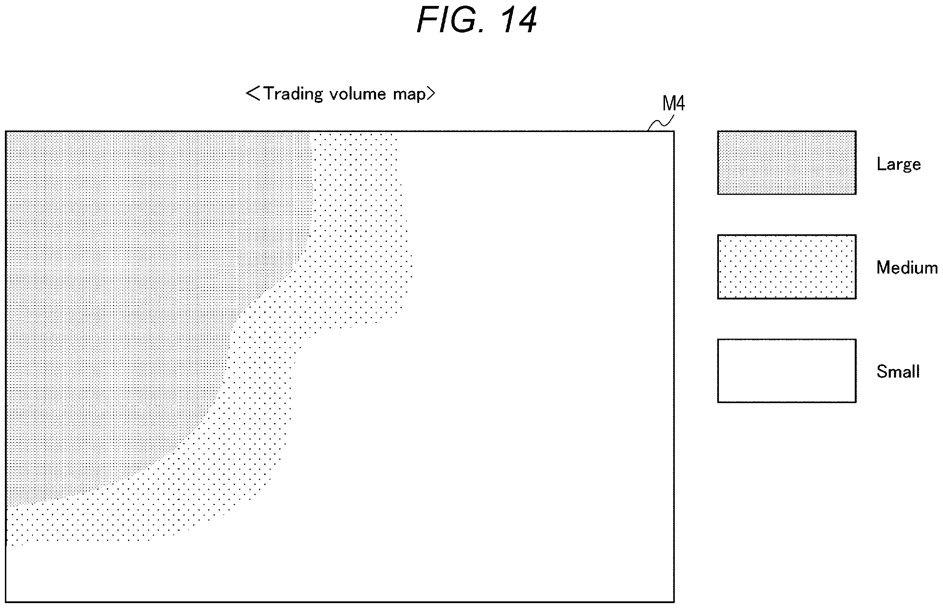

Fig. 14 is a diagram illustrating an example of a trading volume map M4 according to the present embodiment. In the trading volume map M4 illustrated in Fig. 14, the intensity of the trading volume is expressed by density of oblique lines.

Specifically, in the trading volume map M4 illustrated in Fig. 14, a region in which the trading volume is large is represented by high density oblique lines, and a region in which the trading volume is medium is represented by low density oblique lines. Furthermore, a region in which the trading volume is small is represented by plain (white).

Note that, in the trading volume map M4 illustrated in Fig. 14, the intensity of the trading volume is represented by three stages described above to prioritize visibility, but the distiller 216 according to the present embodiment may express the intensity of the trading volume in more stages and continuously.

Furthermore, the distiller 216 according to the present embodiment may generate an active return & trading volume map M5 by superimposing the active return map M1 and the trading volume map M4 on each other.

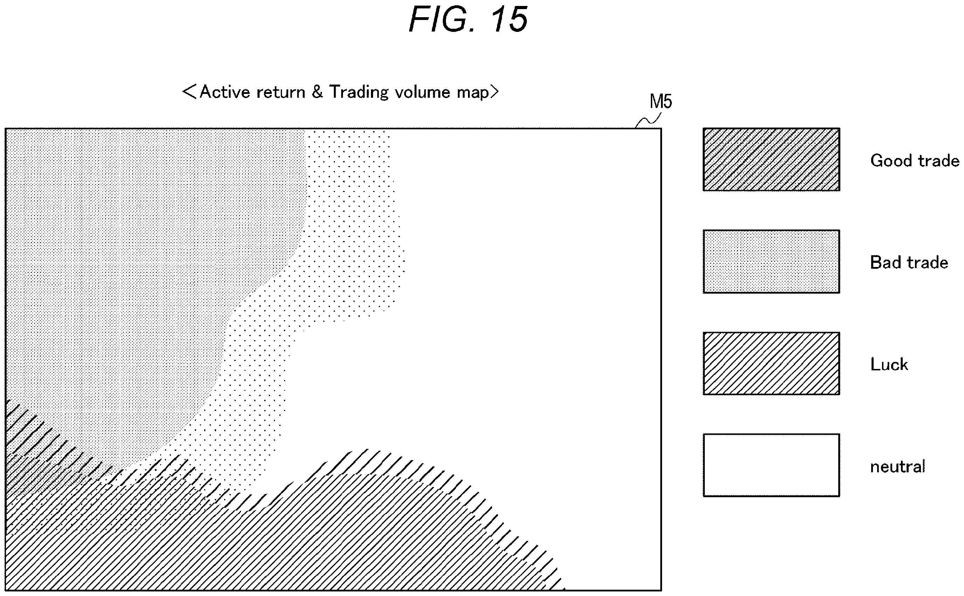

Fig. 15 is a diagram illustrating an example of the active return & trading volume map M5 according to the present embodiment. At this time, the evaluation unit 210 according to the present embodiment can evaluate whether or not the contribution of the action by the person to be evaluated to the active return is due to the ability of the person to be evaluated, on the basis of the active return & trading volume map M5.

For example, in the active return & trading volume map M5 illustrated in Fig. 15, a region in which the active return is high and the trading volume is large is expressed by superimposition of high density oblique lines and high density dots. The region can be said to be a region in which the amount of transactions of the stock is large and a profit is made due to the action by the person to be evaluated.

The evaluation unit 210 according to the present embodiment may therefore evaluate the region described above as a region (Good trade) having a high contribution by the ability of the person to be evaluated.

On the other hand, in the active return & trading volume map M5 illustrated in Fig. 15, a region in which the active return is high and the trading volume is small is expressed by high density oblique lines. The region can be said to be a region in which the amount of transactions of the stock is small but a profit is made relatively.

The evaluation unit 210 according to the present embodiment may therefore evaluate the region described above as a region (Luck) in which a profit is generated by a fluke.

On the other hand, in the active return & trading volume map M5 illustrated in Fig. 15, a region in which the active return is low and the trading volume is large is expressed by high density dots. The region can be said to be a region in which the amount of transactions of the stock is large and a loss is generated due to the action by the person to be evaluated.

The evaluation unit 210 according to the present embodiment may therefore evaluate the region described above as a region (Bad trade) in which a loss is generated due to miscalculation by the person to be evaluated.

In the above, the evaluation using the distiller 216 according to the present embodiment has been described above with specific examples. Note that, the distiller 216 according to the present embodiment can express, in a heat map form, various attributes and indexes based on the attributes, in addition to the active return, the active weight, and the trading volume described above.

The distiller 216 according to the present embodiment may generate a heat map regarding, for example, a price book-value ratio (PBR), a price earnings ratio (PER), stock yield, and the like, and the evaluation unit 210 may perform evaluation based on the heat map.

According to the evaluation method using the distiller 216 according to the present embodiment, it is possible to perform evaluation, for example, the ability has been exhibited (or misread has occurred) in investment to which industrial sector, or investment in which regional area.

Furthermore, according to the evaluation method using the distiller 216 according to the present embodiment, it is possible to perform evaluation, for example, whether the result of not making a profit is due to the influence of the market environment or due to the investment style.

<<1.6. Integrated evaluation based on each analysis result>>

Next, a description will be given of integrated evaluation based on analysis results using the style detector 212, the resembler 214, and the distiller 216 by the evaluation unit 210 according to the present embodiment.

As described above, the evaluation unit 210 according to the present embodiment can perform evaluation of the person to be evaluated on the basis of results of the style analysis using the style detector 212, the consistency analysis using the resembler 214, and the contribution analysis using the distiller 216.

Moreover, the evaluation unit 210 according to the present embodiment may perform integrated evaluation in three axes using three analysis results described above.

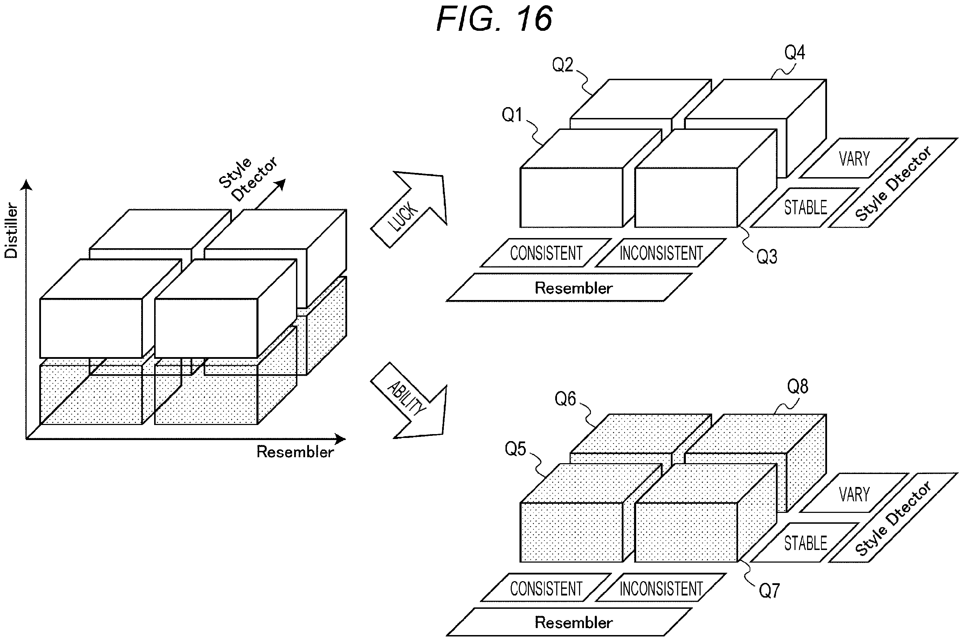

Fig. 16 is a diagram for explaining integrated evaluation in three axes using three analysis results according to the present embodiment.

On the left side of Fig. 16, a schematic diagram is illustrated three-dimensionally representing a mutual relationship among the style analysis using the style detector 212, the consistency analysis using the resembler 214, and the contribution analysis using the distiller 216.

As illustrated in the figure, the evaluation unit 210 according to the present embodiment can classify the evaluation of the person to be evaluated into eight quadrants by using the first axis based on the result of the style analysis using the style detector 212, the second axis based on the result of the consistency analysis using the resembler 214, and a third axis based on the result of the contribution analysis using the distiller 216.

More specifically, the first axis described above may indicate whether the style of the action by the person to be evaluated is stable or varies. Furthermore, the second axis described above may indicate whether the consistency of the action by the person to be evaluated is maintained or is not maintained (inconsistent). Furthermore, the third axis described above may indicate whether the profit obtained by asset management by the person to be evaluated is due to the ability or is due to luck of the person to be evaluated.

In this case, for example, as illustrated in the upper right part of the figure, regarding the profit obtained by luck, the evaluation of the subject can be classified into quadrants Q1 to Q4 by a combination of "stable" or "vary" of the style and "consistent" or "inconsistent".

At this time, for example, regarding the quadrant Q1 in which the action is consistent and the style is stable, the evaluation unit 210 may evaluate that it is possible to switch to asset management based on an index.

Furthermore, for example, regarding the quadrant Q4 in which the action is not consistent and the style varies, the evaluation unit 210 may evaluate that there is a question of continuity only because the profit is increased by chance, and attention is required.

On the other hand, as illustrated in the lower right part of the figure, regarding the profit obtained by the ability, the evaluation of the subject can be classified into the quadrants Q5 to Q8 by a combination of "stable" or "vary" of the style, and "consistent" or "inconsistent".

At this time, for example, regarding the quadrant Q5 in which the action is consistent and the style is stable, the evaluation unit 210 may evaluate that there is a possibility that it is possible to make a smart vector.

Furthermore, for example, regarding the quadrant Q4 in which the action is not consistent and the style varies, the evaluation unit 210 may evaluate that the subject has the ability but no rule is made and individual dependency is high.

In the above, with specific examples, the description has been given of the integrated evaluation based on the analysis results using the style detector 212, the resembler 214, and the distiller 216 by the evaluation unit 210 according to the present embodiment.

Note that, in addition to the evaluation as described above, the evaluation unit 210 can also perform evaluation, for example, whether or not an investment style of the person to be evaluated who made a profit is consistent with an investment style reported in advance, that is, whether or not the person to be evaluated has exhibited one's ability in the investment style reported in advance.

Note that, the output unit 230 according to the present embodiment may output, to a display, a paper medium, or the like, a result of analysis using the style detector 212, the resembler 214, and the distiller 216, or a result of evaluation by the evaluation unit 210.

For example, the output unit 230 may output each map illustrated in Figs. 11 to 15, a graph obtained by plotting the evaluation of the person to be evaluated in eight quadrants illustrated in Fig. 16, or the like.

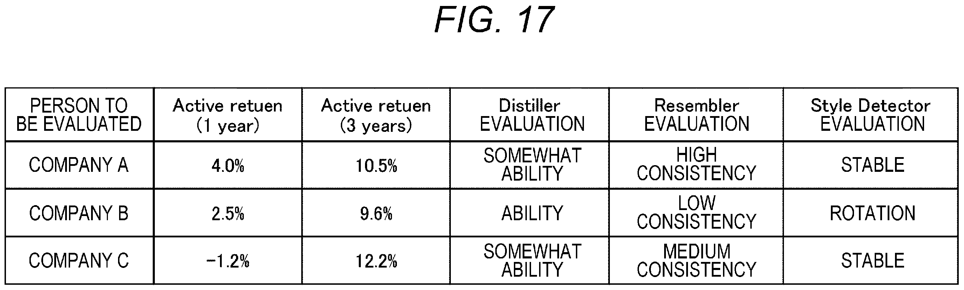

Furthermore, the output unit 230 may output, for example, a comparison table or the like in which evaluations for a plurality of persons to be evaluated are compared with each other as illustrated in Fig. 17.

In the example of the comparison table illustrated in Fig. 17, regarding each of a company A, a company B, and a company C that are persons to be evaluated, active returns, and results of analysis using the style detector 212, the resembler 214, and the distiller 216 are described.

By referring to the comparison table as illustrated in Fig. 17, the evaluator belonging to the fund can consider selecting a person to be contracted in the future from among the plurality of persons to be evaluated, canceling the contract of the fund manager who is currently contracted, and the like.

Furthermore, by referring to various types of information output by the output unit 230, the evaluator belonging to the fund can grasp, for example, that this week's trade is different from the previous tendency, that the profit due to the ability has recently decreased, and the like, and can discuss these with the person to be evaluated. Note that, the output unit 230 may set a threshold value for, for example, a change in style, a decrease in consistency, a decrease in profit due to the ability, or the like, and perform control such as transmitting an alert when each index exceeds the threshold value.

According to each function of the evaluation device 20 according to the present embodiment, even in a case where the evaluator does not have expert knowledge equivalent to that of the person to be evaluated, it is possible to appropriately evaluate the person to be evaluated and to perform constructive discussion with the person to be evaluated.

<<1.7. Flow of processing>>

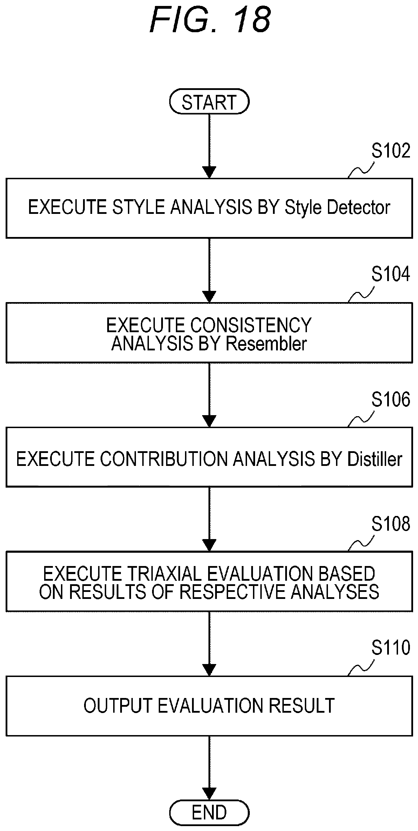

Next, a flow of processing by the evaluation device 20 according to the present embodiment will be described with an example. Fig. 18 is a flowchart illustrating an example of the flow of the processing by the evaluation device 20 according to the present embodiment. Note that, in the following, processing will be exemplified in a case where the evaluation unit 210 according to the present embodiment includes the style detector 212, the resembler 214, and the distiller 216.

As illustrated in Fig. 18, first, the evaluation unit 210 executes style analysis using the style detector 212 (S102).

Next, the evaluation unit 210 executes consistency analysis using the resembler 214 (S104).

Next, the evaluation unit 210 executes consistency analysis using the distiller 216 (S106).

Note that, each piece of processing in steps S102 to S106 may be executed in an order different from the order described above, or may be executed in parallel.

Next, the evaluation unit 210 executes triaxial evaluation based on the results of the respective analyses in steps S102 to S106 (S108).

Next, the output unit 230 outputs a result of the triaxial evaluation in step S108 (S110).

<2. Hardware configuration example>

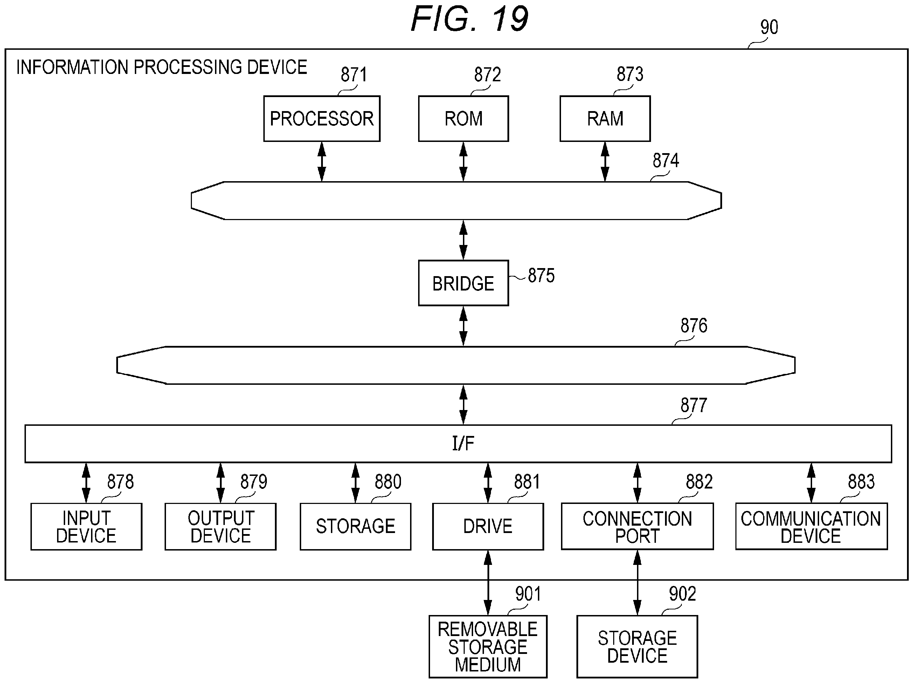

Next, a description will be given of a hardware configuration example common to the learning device 10 and the evaluation device 20 according to the embodiment of the present disclosure. Fig. 19 is a block diagram illustrating a hardware configuration example of an information processing device 90 according to the embodiment of the present disclosure. The information processing device 90 may be a device having a hardware configuration equivalent to that of each of the devices described above. As illustrated in Fig. 19, the information processing device 90 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that, the hardware configuration illustrated here is an example, and some of the components may be omitted. Furthermore, components other than the components illustrated here may be further included.

(Processor 871)

The processor 871 functions as an arithmetic processing device or a control device, for example, and controls entire operation of the components or a part thereof on the basis of various programs recorded in the ROM 872, the RAM 873, the storage 880, or a removable recording medium 901.

(ROM 872, RAM 873)

The ROM 872 is a means for storing a program read by the processor 871, data used for calculation, and the like. The RAM 873 temporarily or permanently stores, for example, a program read by the processor 871, various parameters that appropriately change when the program is executed, and the like.

(Host bus 874, bridge 875, external bus 876, interface 877)

The processor 871, the ROM 872, and the RAM 873 are connected to each other via, for example, the host bus 874 capable of high-speed data transmission. On the other hand, the host bus 874 is connected to the external bus 876 having a relatively low data transmission speed via, for example, the bridge 875. Furthermore, the external bus 876 is connected to various components via the interface 877.

(Input device 878)

As the input device 878, for example, a mouse, a keyboard, a touch panel, a button, a switch, a lever, and the like are used. Moreover, as the input device 878, a remote controller (hereinafter, remote) may be used enabled to transmit a control signal using infrared rays or other radio waves. Furthermore, the input device 878 includes an audio input device such as a microphone.

(Output device 879)

The output device 879 is a device enabled to notify the user of acquired information visually or audibly, for example, a display device such as a Cathode Ray Tube (CRT), LCD, or organic EL, an audio output device such as a speaker or a headphone, a printer, a mobile phone, a facsimile, or the like. Furthermore, the output device 879 according to the present disclosure includes various vibration devices enabled to output tactile stimulation.

(Storage 880)

The storage 880 is a device for storing various data. As the storage 880, for example, a magnetic storage device such as a hard disk drive (HDD), a semiconductor storage device, an optical storage device, a magneto-optical storage device, or the like is used.

(Drive 881)

The drive 881 is, for example, a device that reads information recorded on the removable recording medium 901 such as a magnetic disk, an optical disk, a magneto-optical disk, or a semiconductor memory, or writes information on the removable recording medium 901.

(Removable recording medium 901)

The removable recording medium 901 is, for example, a DVD medium, a Blu-ray (registered trademark) medium, an HD DVD medium, various semiconductor storage media, or the like. Of course, the removable recording medium 901 may be, for example, an IC card on which a non-contact type IC chip is mounted, an electronic device, or the like.

(Connection port 882)

The connection port 882 is, for example, a port for connecting an externally connected device 902, such as a Universal Serial Bus (USB) port, an IEEE1394 port, a Small Computer System Interface (SCSI), an RS-232C port, or an optical audio terminal.

(Externally connected device 902)

The externally connected device 902 is, for example, a printer, a portable music player, a digital camera, a digital video camera, an IC recorder, or the like.

(Communication device 883)

The communication device 883 is a communication device for connecting to a network, and is, for example, a communication card for a wired or wireless LAN, Bluetooth (registered trademark), or Wireless USB (WUSB), a router for optical communication, a router for Asymmetric Digital Subscriber Line (ADSL), a modem for various communication, or the like.

<3. Conclusion>

As described above, the evaluation device 20 according to the embodiment of the present disclosure includes the evaluation unit 210 that performs evaluation of the action by the person to be evaluated on the basis of the action result data indicating the results of the action by the person to be evaluated regarding the predetermined task. Furthermore, one of the features of the evaluation unit 210 according to the embodiment of the present disclosure is to evaluate the action by the person to be evaluated on the basis of the result of the style analysis that analyzes the style of the action by the person to be evaluated and the result of the consistency analysis that analyzes the consistency of the action by the person to be evaluated.

According to the configuration described above, it is possible to implement more appropriate evaluation for the action by the person to be evaluated.

In the above, the preferred embodiments of the present disclosure have been described in detail with reference to the accompanying drawings, but the technical scope of the present disclosure is not limited to such examples. It is obvious that persons having ordinary knowledge in the technical field of the present disclosure can conceive various modification examples or correction examples within the scope of the technical idea described in the claims, and it is understood that the modification examples or correction examples also belong to the technical scope of the present disclosure.

Furthermore, the steps regarding the processing described in this specification do not necessarily have to be processed in time series in the order described in the flowchart or the sequence diagram. For example, the steps regarding the processing of each device may be processed in an order different from the described order or may be processed in parallel.

Furthermore, the series of processing steps by each device described in the present specification may be implemented by using any of software, hardware, and a combination of software and hardware. The program constituting the software is stored in advance in, for example, a recording medium (non-transitory medium) provided inside or outside each device. Then, each program is read into the RAM at the time of execution by the computer, for example, and is executed by various processors. The recording medium described above is, for example, a magnetic disk, an optical disk, a magneto-optical disk, a flash memory, or the like. Furthermore, the computer program described above may be distributed via, for example, a network without using a recording medium.

Furthermore, the effects described in the present specification are merely illustrative or exemplary and not restrictive. That is, the technology according to the present disclosure can achieve other effects that are obvious to those skilled in the art from the description in the present specification, in addition to or instead of the effects described above.

Note that, the following configurations also belong to the technical scope of the present disclosure.

(1) An information processing device including

an evaluation unit that performs evaluation of an action by a person to be evaluated on the basis of action result data indicating a result of the action by the person to be evaluated regarding a predetermined task, in which
the evaluation unit evaluates the action by the person to be evaluated on the basis of a result of style analysis that analyzes a style of the action by the person to be evaluated and a result of consistency analysis that analyzes consistency of the action by the person to be evaluated.

(2) The information processing device according to (1), in which
the evaluation unit evaluates the action by the person to be evaluated on the basis of stability regarding the style of the action by the person to be evaluated within a period corresponding to the action result data input and stability regarding the consistency of the action by the person to be evaluated within the period.
(3) The information processing device according to (2), in which
the evaluation unit evaluates the action by the person to be evaluated on the basis of a first axis indicating whether the style of the action by the person to be evaluated is stable or varies within the period and a second axis indicating whether the consistency of the action by the person to be evaluated is maintained or not within the period.
(4) The information processing device according to any one of (1) to (3), in which
the style analysis is analysis of inputting the action result data to a first classifier generated by deep learning and classifying the style of the action by the person to be evaluated.
(5) The information processing device according to (4), in which
the first classifier is generated by supervised learning using a plurality of sets of virtual action result data based on mutually different styles as training data.
(6) The information processing device according to (5), in which
the virtual action result data is data indicating a result of a virtual action obtained by a program for virtually executing an action regarding the predetermined task on the basis of a predetermined style.
(7) The information processing device according to any one of (1) to (6), in which
the consistency analysis is analysis of inputting the action result data to a second classifier generated by deep learning and classifying similarity to others regarding the action by the person to be evaluated.
(8) The information processing device according to (7), in which
the second classifier is generated by supervised learning using a plurality of sets of other person's action result data regarding a plurality of real others as training data.
(9) The information processing device according to (8), in which

the other person's action result data is data indicating results of actions by the real others regarding the predetermined task.

(10) The information processing device according to any of (1) to (9), in which
the evaluation unit evaluates the action by the person to be evaluated, further on the basis of a result of contribution analysis that analyzes contribution of the action by the person to be evaluated to an evaluation item in the predetermined task.

(11) The information processing device according to (10), in which

the contribution analysis includes: generating, by a third classifier, a two-dimensional map in which a plurality of objects is arranged on a plane, on the basis of attributes of the plurality of objects that is targets of the action by the person to be evaluated input and the action result data for the objects; and
expressing an intensity regarding the evaluation item and an intensity regarding the action by the person to be evaluated in a heat map form in the two-dimensional map.

(12) The information processing device according to (11), in which
the third classifier includes a self-organizing map.

(13) The information processing device according to (11) or (12), in which
the evaluation unit evaluates whether or not the contribution of the action by the person to be evaluated to the evaluation item is due to an ability of the person to be evaluated, on the basis of the two-dimensional map.

(14) The information processing device according to (13), in which
the evaluation unit evaluates a region in which a region having a high intensity regarding the evaluation item and a region having a high intensity regarding the action by the person to be evaluated overlap with each other in the two-dimensional map, as a region having a high contribution due to the ability of the person to be evaluated.

(15) The information processing device according to (13), in which
the evaluation unit evaluates a region in which a region having a high intensity regarding the evaluation item and a region having a low intensity regarding the action by the person to be evaluated overlap with each other in the two-dimensional map, as a region having a low contribution due to the ability of the person to be evaluated.

(16) The information processing device according to any of (1) to (15), in which
the predetermined task includes asset management.

(17) The information processing device according to any of (1) to (16), in which
the action by the person to be evaluated includes a trade transaction of a financial product.

(18) The information processing device according to any of (1) to (17),

further including
an output unit that outputs a result of evaluation by the evaluation unit.

(19) An information processing method including

performing evaluation, by a processor, of an action by a person to be evaluated on the basis of action result data indicating a result of the action by the person to be evaluated regarding a predetermined task,
in which
performing the evaluation further includes evaluating the action by the person to be evaluated on the basis of a result of style analysis that analyzes a style of the action by the person to be evaluated and a result of consistency analysis that analyzes consistency of the action by the person to be evaluated.

(20) A program for causing

a computer to function as
an information processing device including
an evaluation unit that performs evaluation of an action by a person to be evaluated on the basis of action result data indicating a result of the action by the person to be evaluated regarding a predetermined task,
in which
the evaluation unit evaluates the action by the person to be evaluated on the basis of a result of style analysis that analyzes a style of the action by the person to be evaluated and a result of consistency analysis that analyzes consistency of the action by the person to be evaluated.

REFERENCE SIGNS LIST

| 10 | Learning device |
|----|-----------------|
| 110 | Learning unit |
| 120 | Storage unit |
| 20 | Evaluation device |
| 210 | Evaluation unit |
| 212 | Style detector |
| 214 | Resembler |
| 216 | Distiller |
| 217 | Third classifier |
| 220 | Storage unit |
| 230 | Output unit |

**Claims**

1. An information processing device comprising

   an evaluation unit that performs evaluation of an action by a person to be evaluated on a basis of action result data indicating a result of the action by the person to be evaluated regarding a predetermined task, wherein
   the evaluation unit evaluates the action by the person to be evaluated on a basis of a result of style analysis that analyzes a style of the action by the person to be evaluated and a result of consistency analysis that analyzes consistency of the action by the person to be evaluated.

2. The information processing device according to claim 1, wherein
   the evaluation unit evaluates the action by the person to be evaluated on a basis of stability regarding the style of the action by the person to be evaluated within a period corresponding to the action result data input and stability regarding the consistency of the action by the person to be evaluated within the period.

3. The information processing device according to claim 2, wherein
   the evaluation unit evaluates the action by the person to be evaluated on a basis of a first axis indicating whether the style of the action by the person to be evaluated is stable or varies within the period and a second axis indicating whether the consistency of the action by the person to be evaluated is maintained or not within the period.

4. The information processing device according to claim 1, wherein
   the style analysis is analysis of inputting the action result data to a first classifier generated by deep learning and classifying the style of the action by the person to be evaluated.

5. The information processing device according to claim 4, wherein
   the first classifier is generated by supervised learning using a plurality of sets of virtual action result data based on mutually different styles as training data.

6. The information processing device according to claim 5, wherein
   the virtual action result data is data indicating a result of a virtual action obtained by a program for virtually executing an action regarding the predetermined task on a basis of a predetermined style.

7. The information processing device according to claim 1, wherein
   the consistency analysis is analysis of inputting the action result data to a second classifier generated by deep learning and classifying similarity to others regarding the action by the person to be evaluated.

8. The information processing device according to claim 7, wherein
   the second classifier is generated by supervised learning using a plurality of sets of other person's action result data regarding a plurality of real others as training data.

9. The information processing device according to claim 8, wherein
the other person's action result data is data indicating results of actions by the real others regarding the predetermined task.

10. The information processing device according to claim 1, wherein
the evaluation unit evaluates the action by the person to be evaluated, further on a basis of a result of contribution analysis that analyzes contribution of the action by the person to be evaluated to an evaluation item in the predetermined task.

11. The information processing device according to claim 10, wherein

the contribution analysis includes: generating, by a third classifier, a two-dimensional map in which a plurality of objects is arranged on a plane, on a basis of attributes of the plurality of objects that is targets of the action by the person to be evaluated input and the action result data for the objects; and
expressing an intensity regarding the evaluation item and an intensity regarding the action by the person to be evaluated in a heat map form in the two-dimensional map.

12. The information processing device according to claim 11, wherein the third classifier includes a self-organizing map.

13. The information processing device according to claim 11, wherein
the evaluation unit evaluates whether or not the contribution of the action by the person to be evaluated to the evaluation item is due to an ability of the person to be evaluated, on a basis of the two-dimensional map.

14. The information processing device according to claim 13, wherein
the evaluation unit evaluates a region in which a region having a high intensity regarding the evaluation item and a region having a high intensity regarding the action by the person to be evaluated overlap with each other in the two-dimensional map, as a region having a high contribution due to the ability of the person to be evaluated.

15. The information processing device according to claim 13, wherein
the evaluation unit evaluates a region in which a region having a high intensity regarding the evaluation item and a region having a low intensity regarding the action by the person to be evaluated overlap with each other in the two-dimensional map, as a region having a low contribution due to the ability of the person to be evaluated.

16. The information processing device according to claim 1, wherein
the predetermined task includes asset management.

17. The information processing device according to claim 1, wherein
the action by the person to be evaluated includes a trade transaction of a financial product.

18. The information processing device according to claim 1,

further comprising
an output unit that outputs a result of evaluation by the evaluation unit.

19. An information processing method comprising

performing evaluation, by a processor, of an action by a person to be evaluated on a basis of action result data indicating a result of the action by the person to be evaluated regarding a predetermined task, wherein
performing the evaluation further includes evaluating the action by the person to be evaluated on a basis of a result of style analysis that analyzes a style of the action by the person to be evaluated and a result of consistency analysis that analyzes consistency of the action by the person to be evaluated.

20. A program for causing

a computer to function as
an information processing device including
an evaluation unit that performs evaluation of an action by a person to be evaluated on a basis of action result data indicating a result of the action by the person to be evaluated regarding a predetermined task, wherein
the evaluation unit evaluates the action by the person to be evaluated on a basis of a result of style analysis that analyzes a style of the action by the person to be evaluated and a result of consistency analysis that analyzes consistency of the action by the person to be evaluated.

# FIG. 1

10

LEARNING DEVICE

110

LEARNING UNIT ⟷ STORAGE UNIT

120

# FIG. 2

20

EVALUATION DEVICE

210

EVALUATION UNIT

212

Style Detector ⟷ STORAGE UNIT

220

214

Resembler

216

Distiller ⟷ OUTPUT UNIT

320

*FIG. 3*

# FIG. 4

Resembler 214

DNN 114

TD1 — OTHER PERSON'S ACTION RESULT DATA (OTHER PERSON 1)

TD2 — OTHER PERSON'S ACTION RESULT DATA (OTHER PERSON 2)

TDn — OTHER PERSON'S ACTION RESULT DATA (OTHER PERSON n)

...

## FIG. 5

EP 4 020 348 A1

$\left(\begin{array}{c}\text{ACTION RESULT} \\ \text{DATA}\end{array}\right)$ ID

212 Style Detector

SO $\left\{\begin{array}{l}\text{STYLE 1 XX\%} \\ \text{STYLE 2 YY\%} \\ \vdots \\ \text{STYLE n ZZ\%}\end{array}\right\}$

214 Resembler

RO $\left\{\begin{array}{l}\text{RESEMBLANCE OF OTHER PERSON 1 XX\%} \\ \text{RESEMBLANCE OF OTHER PERSON 2 YY\%} \\ \vdots \\ \text{RESEMBLANCE OF OTHER PERSON n YY\%}\end{array}\right\}$

# FIG. 6

<Resembler OUTPUT>

<Style Detector OUTPUT>

# FIG. 7

\<Resembler OUTPUT\>

\<Style Detector OUTPUT\>

# FIG. 8

\<Resembler OUTPUT\>

\<Style Detector OUTPUT\>

# FIG. 9

<Resembler OUTPUT>

<Style Detector OUTPUT>

# FIG. 10

$$\left(\begin{array}{l}\text{ATTRIBUTE OF OBJECT,}\\\text{ACTION RESULT DATA}\end{array}\right)$$ ID $\longrightarrow$ NN 116 $\longrightarrow$ M0

THIRD CLASSIFIER 217

EP 4 020 348 A1

# FIG. 11

<Active return map>

FIG. 12

<Active weight map>

M2

over

neutral

under

EP 4 020 348 A1

## FIG. 13

<Active return & Active weight map>

M3

Good choice

Luck

Bad choice

neutral

# FIG. 14

<Trading volume map>

M4

Large

Medium

Small

FIG. 15

M5

<Active return & Trading volume map>

Good trade

Bad trade

Luck

neutral

FIG. 16

| PERSON TO BE EVALUATED | Active retuen (1 year) | Active retuen (3 years) | Distiller EVALUATION | Resembler EVALUATION | Style Detector EVALUATION |
|---|---|---|---|---|---|
| COMPANY A | 4.0% | 10.5% | SOMEWHAT ABILITY | HIGH CONSISTENCY | STABLE |
| COMPANY B | 2.5% | 9.6% | ABILITY | LOW CONSISTENCY | ROTATION |
| COMPANY C | −1.2% | 12.2% | SOMEWHAT ABILITY | MEDIUM CONSISTENCY | STABLE |

EP 4 020 348 A1

# FIG. 18

START

S102

EXECUTE STYLE ANALYSIS BY Style Detector

S104

EXECUTE CONSISTENCY
ANALYSIS BY Resembler

S106

EXECUTE CONTRIBUTION ANALYSIS BY Distiller

S108

EXECUTE TRIAXIAL EVALUATION BASED
ON RESULTS OF RESPECTIVE ANALYSES

S110

OUTPUT EVALUATION RESULT

END

# FIG. 19

INFORMATION PROCESSING DEVICE — 90

PROCESSOR 871 · ROM 872 · RAM 873 · 874 · BRIDGE 875 · 876 · 877 · I/F · INPUT DEVICE 878 · OUTPUT DEVICE 879 · STORAGE 880 · DRIVE 881 · CONNECTION PORT 882 · COMMUNICATION DEVICE 883 · REMOVABLE STORAGE MEDIUM 901 · STORAGE DEVICE 902

EP 4 020 348 A1

## INTERNATIONAL SEARCH REPORT

| | International application No. |
|---|---|
| | PCT/JP2020/030778 |

**A. CLASSIFICATION OF SUBJECT MATTER**
G06Q 10/06(2012.01)i
FI: G06Q10/06 332
According to International Patent Classification (IPC) or to both national classification and IPC

**B. FIELDS SEARCHED**

Minimum documentation searched (classification system followed by classification symbols)
G06Q10/00-99/00

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-522676 A (PYMETRICS, INC.) 10 August 2017 (2017-08-10) entire text, all drawings | 1-20 |
| A | US 2013/0297326 A1 (YE, Gewei) 07 November 2013 (2013-11-07) entire text, all drawings | 1-20 |
| A | JP 2019-008529 A (NOMURA RESEARCH INSTITUTE, LTD.) 17 January 2019 (2019-01-17) entire text, all drawings | 1-20 |
| A | JP 2014-238649 A (FUJITSU LTD.) 18 December 2014 (2014-12-18) entire text, all drawings | 1-20 |
| A | JP 2017-224256 A (MASAYOSHI, Sadao) 21 December 2017 (2017-12-21) entire text, all drawings | 1-20 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 October 2020 (19.10.2020) | 27 October 2020 (27.10.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| | International application No. |
|---|---|
| | PCT/JP2020/030778 |

| Patent Documents referred in the Report | Publication Date | Patent Family | Publication Date |
|---|---|---|---|
| JP 2017-522676 A | 10 Aug. 2017 | US 2016/0292645 A1 entire text, all drawings US 2018/0075416 A1 WO 2015/200880 A1 CA 2953687 A1 KR 10-2017-0042286 A CN 106663240 A | |
| US 2013/0297326 A1 | 07 Nov. 2013 | (Family: none) | |
| JP 2019-008529 A | 17 Jan. 2019 | (Family: none) | |
| JP 2014-238649 A | 18 Dec. 2014 | (Family: none) | |
| JP 2017-224256 A | 21 Dec. 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009245368 A